# FASCICULE DE BREVET EUROPEEN

(11) **EP 0 824 375 B1**
(45) Date de publication et mention de la délivrance du brevet: **14.07.1999**
(21) Numéro de dépôt: 96919851.4
(22) Date de dépôt: 30.04.1996
(51) Int. Cl.: B03C 1/015, C01B 31/30

(54) **PROCEDE DE SEPARATION MAGNETIQUE DU CARBURE DE FER**
MAGNETISCHES TRENNUNGSVERFAHREN FÜR EISENCARBID
MAGNETIC SEPARATION METHOD FOR IRON CARBIDE

(30) Priorité: 04.05.1995 FR 9505356
(43) Date de publication de la demande: 25.02.1998
(73) Titulaire: KVAERNER (FRANCE) SA, 93513 Montreuil Cédex (FR)
(72) Inventeur: RUER, Jacques, F-78230 Le Pecq (FR)
(74) Mandataire: Armengaud Ainé, Alain
(86) Numéro de dépôt international: FR9600658
(87) Numéro de publication internationale: WO9634692

(56) Documents cités:
- DE-B- 1 177 575
- GB-A- 1 219 980
- US-A- 4 396 423

## Description

L'invention est relative à un procédé et une installation de purification du carbure de fer. Le carbure de fer Fe₃C est produit industriellement à partir de la réaction dans un four industriel, généralement constitué d'un réacteur à lit fluidisé, d'un mélange d'oxydes de fer dans une atmosphère réductrice riche en hydrogène et en méthane. Le Fe₃C obtenu en sortie de réacteur n'est pas pur, il comporte bien entendu une importante quantité de Fe₃C, de l'ordre de 90 à 95%, mais aussi du Fe 0.5 à 1.5%, des oxydes de fer, essentiellement de la magnétite Fe₃O₄ de 2 à 5%, ainsi que de la gangue par exemple du SiO₂ dont la nature est variable en fonction de la provenance du minerai.Ce mélange à base de carbure de fer Fe₃C est utilisé comme apport de métal dans un four électrique d'aciérie.

L'invention vise plus particulièrement un procédé permettant la purification du carbure de fer, et particulièrement la séparation des impuretés présentes avec le carbure de fer Fe₃C.

A cette fin, on utilise les propriétés ferromagnétiques des différents éléments.

On connaît par le document U.S.-4.396.423 un procédé de séparation magnétique du carbure de fer et du zinc à partir d'une gangue de minerai, après une étape de carburation et préalablement à une étape de séparation du zinc du carbure de fer.

Ainsi, on sait que le carbure de fer Fe₃C est ferromagnétique à la température ambiante et que cette propriété disparaît au-dessus d'une certaine température, appelée température de Curie. Particulièrement, en ce qui concerne le Fe₃C et selon ses caractéristiques, cette température de Curie varie de 180°C à 230°C.

Cette même propriété est également valable pour les composés en mélange avec le Fe₃C, pour le Fe 768°C et pour le Fe₃O₄ 575°C. Ces valeurs sont indicatives et peuvent varier en fonction de la pureté chimique des échantillons.

La présente invention vise à permettre l'exploitation de cette propriété au niveau des diverses zones de soutirage d'un réacteur à lit fluidisé pour la fabrication de carbure de fer, en proposant des étapes de séparation à des températures différentes, choisies en fonction des températures de Curie des divers éléments en mélange avec le carbure de fer, afin d'obtenir en sortie de cette succession d'étapes de séparation, une purification du carbure de fer.

A cet effet, le procédé de purification du carbure de fer, se caractérise en ce que :
- on extrait d'une enceinte réactionnelle, un mélange de carbure de fer, de fer, d'oxydes de fer et de gangue,
- on effectue éventuellement un léger refroidissement du mélange sortant, la chaleur récupérée étant utilisée pour le réchauffage des produits de la phase de recyclage, dans une atmosphère de composition convenable pour ne pas détruire le carbure de fer,
- le mélange dont la température est comprise entre 230 et 575°C traverse un premier champ magnétique, permettant ainsi de le séparer en une fraction magnétique consistant de fer et oxydes et en une fraction amagnétique consistant de carbure de fer et gangue,
- la fraction amagnétique est dirigée vers une enceinte dans laquelle elle est refroidie à une température inférieure à la température de Curie du carbure de fer,
- le mélange constitué de gangue et de carbure de fer traverse un second champ magnétique, permettant ainsi de le séparer en une fraction magnétique consistant de carbure de fer) et en une fraction amagnétique consistant de gangue.

D'autres caractéristiques et avantages de la présente invention ressortiront de la description faite ci-après, en référence aux dessins annexés qui en illustrent un exemple de réalisation dépourvu de tout caractère limitatif. Sur les figures :

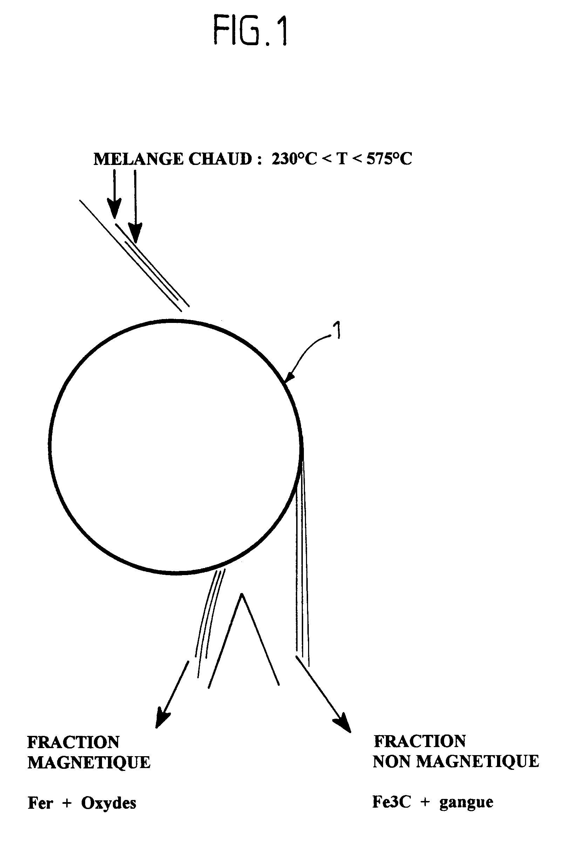

- la figure 1 est une vue synoptique illustrant le procédé de tri magnétique d'un mélange ;

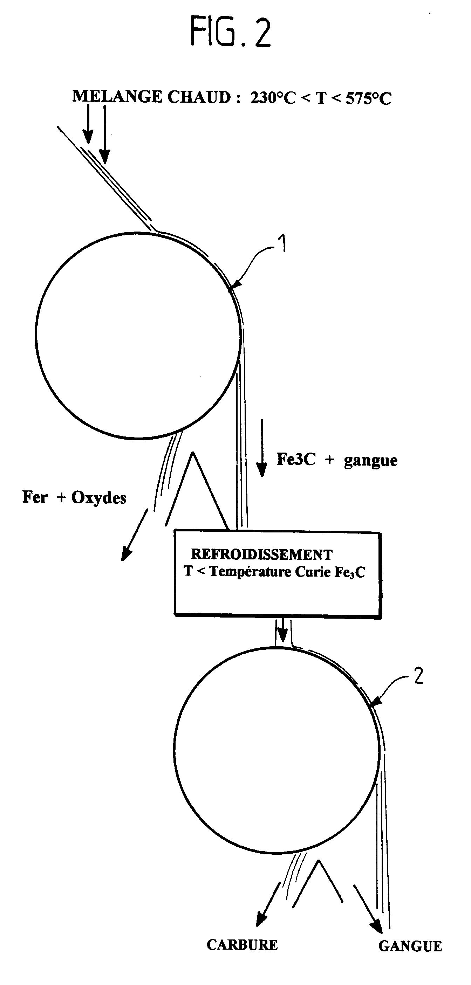

- la figure 2 est une vue synoptique illustrant le procédé de tri magnétique d'un mélange contenant du carbure de fer ;

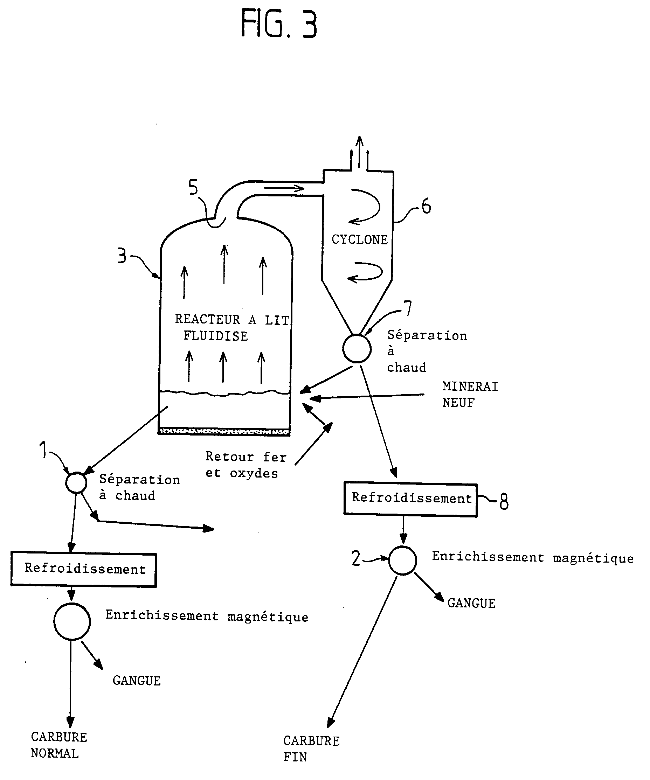

- la figure 3 illustre l'application du procédé de séparation magnétique à un réacteur à lit fluidisé ;

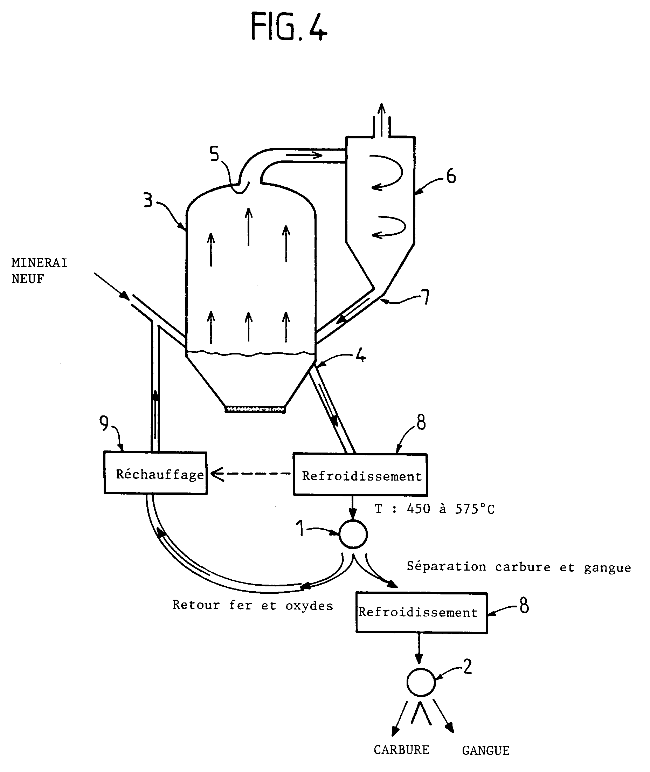

- la figure 4 illustre l'application du procédé de séparation magnétique à un réacteur à lit fluidisé circulant.

Selon un mode préféré de réalisation d'une installation pour la mise en oeuvre du procédé, objet de l'invention, elle comporte principalement au moins un séparateur magnétique, 1, 2 avantageusement disposé en sortie des zones de soutirage d'un réacteur à lit fluidisé 3.

Dans une application à la fabrication du carbure de fer, un réacteur à lit fluidisé 3 comportant une charge de fines de minerai de fer en réaction au sein d'une atmosphère réductrice, riche notamment en hydrogène et en méthane et/ou d'hydrocarbure léger (éthane, propane, butane) dispose généralement de deux zones de soutirage 4,5 : l'une placée en partie inférieure (zone de soutirage principale) et l'autre placée en partie supérieure (zone de soutirage secondaire) étant reliée à un cyclone 6, lui-même équipé d'une zone de soutirage 7. De façon connue, la température réactionnelle du mélange de minerai de fer et de carbure de fer se situe dans une fourchette de températures comprise entre 450°C et 600°C et avantageusement cette température est comprise notamment dans une fourchette de l'ordre de 550 à 600 °C.

Par ailleurs, ce réacteur est parcouru par un débit gazeux réducteur pour fluidiser les particules de minerai et les transformer en carbure de fer, une partie non négligeable des solides est entraînée par celui-ci hors du réacteur en direction du cyclone 6, qui recycle ces particules vers le réacteur 3.

Le recyclage, bien que nécessaire pour augmenter le rendement, comporte principalement deux inconvénients :
- d'une part, les fines ont une grande probabilité d'être entraînées de nouveau, si bien que le cyclone est encombré par un flux de solides effectuant de nombreux passages ;
- d'autre part, le retour du cyclone s'effectue en un point donné du réacteur, si bien que dans cette zone, il coexiste une proportion de fines nettement supérieure aux autres régions voisines, ce qui génère des conditions de fluidisation non homogènes dans toutes les parties du réacteur.

Ces conditions d'hétérogénéité sont préjudiciables au bon fonctionnement du réacteur 3, et notamment lorsque ce réacteur est de grandes dimensions.

On est donc amené à disposer en sortie de cyclone 6 et de réacteur 3 des étapes en vue de séparer les différentes familles de particules.

Ainsi, en sortie de réacteur 3, on prélève une fraction du mélange circulant de carbure de fer, d'oxydes de fer, de fer et de gangue, dont la température, est amenée entre 400 et 575 °C, et on la dirige vers un séparateur magnétique 1 afin de diviser le mélange en une fraction magnétique constituée principalement d'éléments dont la température de Curie est inférieure ou égale à la température du mélange de fer et d'oxyde de fer et en une fraction amagnétique, constituée principalement d'éléments dont la température est supérieure à la température de Curie de ces éléments (il s'agit notamment du carbure et de la gangue).

On effectue éventuellement un léger refroidissement du mélange sortant, la chaleur récupérée pouvant être utilisée pour le réchauffage des produits de la phase de recyclage ou du minerai neuf, dans une atmosphère de composition convenable pour ne pas détruire le carbure de fer ; cette atmosphère comporte essentiellement un mélange à base de méthane et d'hydrogène dont la composition exacte dépend particulièrement de la température et de la pression.

Par la suite, la fraction comportant le fer et les oxydes de fer est dirigée vers le réacteur aux fins de conversion en carbure de fer. La fraction amagnétique à la température de première séparation est amenée vers une phase de refroidissement 8, particulièrement mise en oeuvre dans une enceinte dans laquelle elle est refroidie à une température inférieure à la température de Curie du carbure de fer.

En aval de cette étape, on procède de nouveau au tri par l'intermédiaire d'un séparateur magnétique 2. Le champ magnétique produit par ce second séparateur divise la fraction entrante en une fraction magnétique (le carbure de fer) et en une fraction amagnétique (la gangue).

La fraction magnétique de carbure de fer obtenue en sortie de ce séparateur constitue le soutirage principal du réacteur 4 et les particules obtenues ont une granulométrie comprise entre 100 µm et 1000 µm de diamètre moyen.

En sortie de cyclone 7, on dispose également d'une étape de séparation des fines en circulation, la température du mélange étant également située dans l'intervalle de 230 à 575 °C ; au sein d'un séparateur magnétique, il est possible de trier le mélange en circulation en deux fractions, respectivement magnétique et amagnétique. De façon similaire à l'étape de séparation 1, 2 prévue en sortie de réacteur 3, on obtient une première fraction constituée essentiellement de fines d'oxyde de fer et de fer qui sont réintroduites dans le lit du réacteur aux fins de conversion en carbure de fer. La seconde fraction de fines de gangue et de carbure de fer, amagnétique à cette température, est dirigée vers une étape de refroidissement 8 essentiellement constituée d'une enceinte permettant l'amenée de cette fraction à une température inférieure à la température de Curie du carbure de fer. Puis, la fraction constituée de carbure de fer et de gangue est amenée vers une phase de tri magnétique qui permet de séparer les éléments magnétiques (fines de carbure de fer), des éléments amagnétiques (fines de gangue). En sortie de cette étape de tri magnétique, le carbure de fer est constitué essentiellement de particules dont la dimension est inférieure ou égale à 100 µm.

Selon une autre variante, le procédé de purification par séparation magnétique est appliqué au sein d'un réacteur à lit fluidisé circulant. Ce réacteur 3 se différencie du réacteur précédent en ce qu'il comporte une unique zone de soutirage.

Ainsi, ce réacteur à lit fluidisé circulant comporte en aval de sa zone de soutirage 4, une étape de refroidissement 8 chargée d'amener le mélange de carbure de fer, d'oxydes de fer, de gangue et de fer à une température comprise dans l'intervalle de 400 à 575 °C afin de pouvoir partager le mélange en sortie d'un séparateur magnétique 1, 2 en une fraction magnétique (fer et oxydes de fer) et en une fraction amagnétique (carbure de fer et gangue). La fraction de fer et d'oxydes de fer, pour conversion en carbure de fer, est réintroduite dans le lit du réacteur 3 après avoir subi un réchauffement dans un échangeur 9.

La fraction amagnétique est dirigée vers une seconde étape 8 de refroidissement afin d'amener la température du mélange à une température inférieure à la température de Curie du carbure de fer.

Finalement, cette fraction de mélange devenue magnétique passe au travers d'une unité de séparation magnétique pour diviser le carbure de fer de la gangue.

Quel que soit le mode de fabrication du carbure de fer au sein d'un réacteur à lit fluidisé simple ou d'un réacteur à lit fluidisé circulant, les particules de carbure de fer doivent être refroidies en-dessous de 300°C afin d'éviter leur inflammation. En fait, il est judicieux de les refroidir jusqu'à une température proche de la température ambiante.

Si le magnétisme du matériau en sortie de réacteur est suffisant, on utilise cette propriété pour favoriser le transport en disposant le long des lignes de transfert des organes magnétiseurs. Si au contraire,.le magnétisme rémanent gêne pour le transport, on dispose des organes démagnétiseurs.

L'invention décrite ci-dessus offre de multiples avantages :
- grâce à une séparation sélective des composants du mélange en fonction de leur nature et de leur granulométrie, la conduite d'un réacteur à lit fluidisé est améliorée en ce qui concerne sa stabilité et son rendement de conversion ;
- la séparation magnétique peut être également appliquée en sortie du lit sur le carbure de fer afin d'améliorer sa qualité.

Il demeure bien entendu que la présente invention n'est pas limitée aux exemples de réalisation décrits et représentés ci-dessus, mais qu'elle en englobe toutes les variantes comme définies par les revendications.

## Revendications

1. Procédé de purification du carbure de fer, caractérisé en ce que :
- on extrait d'une enceinte réactionnelle (3), un mélange de carbure de fer, d'oxydes de fer, de fer, et de gangue,
- on effectue éventuellement un léger refroidissement du mélange sortant, la chaleur récupérée étant utilisée pour le réchauffage des produits de la phase de recyclage, dans une atmosphère de composition convenable pour ne pas détruire le carbure de fer,
- le mélange dont la température est comprise entre 230 et 575 °C traverse un premier champ magnétique (1), permettant ainsi de le séparer en une fraction magnétique consistant de fer et oxydes et en une fraction amagnétique consistant de carbure de fer et gangue,
- la fraction amagnétique est dirigée vers une enceinte (8) dans laquelle elle est refroidie à une température inférieure à la température de Curie du carbure de fer,
- le mélange constitué de gangue et de carbure de fer traverse un second champ magnétique (2), permettant ainsi de le séparer en une fraction magnétique consistant de carbure de fer et en une fraction amagnétique consistant de gangue.

2. Procédé de purification du carbure de fer selon la revendication 1, caractérisé en ce que la première séparation magnétique s'effectue à une température comprise entre 400 °C et 575 °C.

3. Procédé de purification du carbure de fer selon l'une des revendications 1 ou 2, caractérisé en ce qu'il permet de séparer des particules dont le diamètre moyen est compris entre 100 et 1000 µm en sortie du soutirage principal de l'enceinte réactionnelle et des fines de diamètre moyen inférieur à 100 µm.

4. Installation pour la mise en oeuvre du procédé selon l'une des revendications 1 à 3, caractérisée en ce qu'elle comporte un réacteur à lit fluidisé (3) comprenant une charge de fines de minerai de fer en réaction au sein d'une atmosphère réductrice, et qu'elle dispose de deux zones de soutirage (4,5) : l'une placée en partie inférieure et l'autre placée en partie supérieure étant reliée à un cyclone (6), lui-même équipé d'une zone de soutirage (7); elle est munie en outre en sortie de cette dernière et en sortie de la zone de soutirage principal d'au moins un séparateur magnétique (1, 2), suivi d'au moins une enceinte de refroidissement (8) afin d'amener la température du mélange à une température inférieure à la température de Curie du carbure de fer, et qui comporte en aval au moins un séparateur magnétique (1, 2) afin de trier les divers éléments de la charge de minerai entrante.

5. Installation pour la mise en oeuvre du procédé selon l'une des revendications 1 à 3, caractérisée en ce qu'elle comporte un réacteur à lit fluidisé (3) circulant comprenant en aval de sa zone de soutirage (4), une enceinte de refroidissement (8) munie en sortie d'un séparateur magnétique (1), chargé d'effectuer le tri du mélange en une fraction magnétique consistant de fer et oxydes de fer et en une fraction amagnétique consistant de carbure de fer et gangue, la fraction de fer et d'oxydes de fer, pour conversion en carbure de fer, étant réintroduite dans le lit du réacteur (3) après avoir subi un réchauffement dans un échangeur (9), la fraction amagnétique consistant de carbure de fer et gangue étant dirigée vers une seconde étape (8) de refroidissement afin d'amener la température du mélange à une température inférieure à la température de Curie du carbure de fer, cette étape (8) comportant en aval un séparateur magnétique (2) chargé de trier les divers éléments de la charge de minerai entrante.

6. Installation pour la mise en oeuvre du procédé selon l'une des revendications 4 ou 5, caractérisée en ce les particules de carbure de fer sont refroidies en-dessous de 300°C, au sein d'enceintes (8) prévues en sortie des zones de soutirage (4,5) afin d'éviter leur inflammation.

## Claims

1. Process for the purification of iron carbide, characterised in that
- a mixture of iron carbide, iron oxides, iron and matrix is extracted from a reaction chamber (3),
- slight cooling of the discharging mixture may possibly be carried out, the heat recuperated being used to reheat the products of the recycling phase in an atmosphere with a suitable composition which will not destroy the iron carbide,
- the mixture, the temperature of which is in the range between 230° and 575°C, is passed through a first magnetic field (1), thus enabling its separation into a magnetic fraction consisting of iron and oxides and a non-magnetic fraction consisting of iron carbide and matrix,
- the non-magnetic fraction is directed towards a chamber (8) in which it is cooled to a temperature which is lower than the Curie temperature of the iron carbide,
- the mixture comprising matrix and iron carbide is passed through a second magnetic field (2), thus enabling its separation into a magnetic fraction consisting of iron carbide and a non-magnetic fraction consisting of matrix.

2. Process for the purification of iron carbide according to Claim 1, characterised in that the first magnetic separation is carried out at a temperature in the range of between 400°C and 575°C.

3. Process for the purification of iron carbide according to one of Claims 1 or 2, characterised in that it enables separation of particles with an average diameter in the range of between 100 and 1000 µm at the outlet of the main extraction means of the reaction chamber and of fines with an average diameter of less than 100 µm.

4. Installation for conducting the process according to one of Claims 1 to 3, characterised in that it comprises a fluidised-bed reactor (3) containing a charge of iron mineral fines reacting within a reduction atmosphere, and that it has two extraction zones (4, 5): one located in the lower part and the other located in the upper part, and being connected to a cyclone (6), which is itself equipped with an extraction zone (7); the installation is moreover equipped with at least one magnetic separator (1, 2) at the outlet of the latter and at the outlet of the main extraction zone, followed by at least one cooling chamber (8) in order to bring the temperature of the mixture to a temperature which is lower than the Curie temperature of the iron carbide, and which has at least one magnetic separator (1, 2) arranged downstream in order to sort the various elements from the incoming mineral charge.

5. Installation for conducting the process according to one of Claims 1 to 3, characterised in that it comprises a rotating fluidised-bed reactor (3) comprising, downstream of its extraction zone (4), a cooling chamber (8) fitted at the outlet of a magnetic separator (1) for the purpose of conducting the sorting of the mixture into a magnetic fraction consisting of iron and iron oxides and a non-magnetic fraction consisting of iron carbide and matrix, the fraction of iron and iron oxides being reintroduced into the reactor bed (3), for conversion into iron carbide, after having undergone cooling in an exchanger (9), the non-magnetic fraction consisting of iron carbide and matrix being directed towards a second cooling stage (8) in order to bring the temperature of the mixture to a temperature which is lower than the Curie temperature of the iron carbide, this stage (8) comprising a magnetic separator (2) arranged downstream for sorting the various elements from the incoming mineral charge.

6. Installation for conducting the process according to one of Claims 4 or 5, characterised in that the iron carbide particles are cooled to below 300°C within chambers (8) provided at the outlet of the extraction zones (4, 5) in order to prevent their inflammation.

## Patentansprüche

1. Verfahren zur Reinigung von Eisencarbid, dadurch gekennzeichnet, daß
- aus einem Reaktionsraum (3) ein Gemisch von Eisencarbid, Eisenoxiden, Eisen und Gangart entnommen wird,
- gegebenenfalls das austretende Gemisch in einer Atmosphäre geeigneter Zusammensetzung, so daß das Eisencarbid nicht zersetzt wird, etwas gekühlt wird, wobei die entzogene Wärme zum Erwärmen von Produkten der Rückführphase verwendet wird,
- das Gemisch, dessen Temperatur zwischen 230 und 575°C liegt, ein erstes magnetisches Feld (1) durchläuft, wodurch es in eine aus Eisen und Oxiden bestehende magnetische Fraktion und in eine aus Eisencarbid und Gangart bestehende unmagnetische Fraktion getrennt wird;
- die unmagnetische Fraktion in einen Raum (8) geleitet wird, in welchem sie auf eine Temperatur gekühlt wird, die unterhalb der Curie-Temperatur des Eisencarbids liegt,
- das Gemisch bestehend aus Gangart und Eisencarbid ein zweites magnetisches Feld (2) durchläuft, wodurch es in eine magnetische Fraktion bestehend aus Eisencarbid und eine unmagnetische Fraktion bestehend aus Gangart getrennt wird.

2. Verfahren zur Reinigung von Eisencarbid nach Anspruch 1, dadurch gekennzeichnet, daß die erste magnetische Trennung bei einer Temperatur zwischen 400 und 575°C erfolgt.

3. Verfahren zur Reinigung von Eisencarbid nach einem der Ansprüche 1 oder 2, dadurch gekennzeichnet, daß es die Trennung von Partikeln, deren mittlerer Durchmesser bei der Hauptentnahme aus dem Reaktionsraum zwischen 100 und 1000 µm liegt, und von Feinkorn ermöglicht, dessen mittlerer Durchmesser unter 100 µm liegt.

4. Vorrichtung zur Anwendung des Verfahrens gemäß einem der Ansprüche 1 bis 3, dadurch gekennzeichnet, daß sie einen Wirbelbettreaktor (3) aufweist, der mit feinkörnigem Eisenerz gefüllt ist, das in einer reduzierenden Atmosphäre reagiert, und daß sie zwei Entnahmebereiche (4, 5) aufweist, von denen der eine, der sogenannte Hauptentnahmebereich, im unteren Teil angeordnet ist und der andere im oberen Teil angeordnet und mit einem Zyklon (6) verbunden ist, der seinerseits einen Entnahmebereich (7) aufweist; wobei die Vorrichtung weiterhin am Ausgang dieses letzteren und am Ausgang des Hauptentnahmebereichs mindestens eine magnetische Trennvorrichtung (1, 2) aufweist, auf die mindestens ein Kühlraum (8) folgt, um das Gemisch auf eine Temperatur abzukühlen, die unter der Curie-Temperatur des Eisencarbids liegt, und stromabwärts mindestens eine magnetische Trennvorrichtung (1, 2) aufweist, um die verschiedenen Bestandteile der eingeführten Erzfüllung zu trennen.

5. Vorrichtung zur Anwendung des Verfahrens nach einem der Ansprüche 1 bis 3, dadurch gekennzeichnet, daß sie einen Wirbelbettreaktor (3) aufweist, der stromabwärts von seinem Entnahmebereich (4) einen Kühlraum (8) aufweist, der an seinem Ausgang eine magnetische Trennvorrichtung (1) aufweist, die das Gemisch in eine magnetische Fraktion bestehend aus Eisen und Eisenoxiden und in eine unmagnetische Fraktion bestehend aus Eisencarbid und Gangart trennt, wobei die aus Eisen und Eisenoxiden bestehende Fraktion nach Erwärmung in einem Wärmetauscher (9) zur Umwandlung in Eisencarbid wieder in das Wirbelbett zurückgeführt wird, und die aus Eisencarbid und Gangart bestehende unmagnetische Fraktion in eine zweite Kühlstufe (8) geleitet wird, um die Temperatur des Gemisches auf eine Temperatur unter der Curie-Temperatur des Eisencarbids abzukühlen, wobei diese Stufe (8) stromabwärts eine magnetische Trennvorrichtung (2) aufweist, um die verschiedenen Bestandteile der eintretenden Erzfüllung zu trennen.

6. Vorrichtung zur Anwendung des Verfahrens nach einem der Ansprüche 4 oder 5, dadurch gekennzeichnet, daß die Eisencarbidpartikel in am Ausgang der Entnahmebereiche (4, 5) angeordneten Kühlbereichen (8) auf unter 300° abgekühlt werden, um ihre Entzündung zu verhindern.
